# EUROPEAN PATENT SPECIFICATION

(11) **EP 0 600 540 B1**
(45) Date of publication and mention of the grant of the patent: **11.02.1998**
(21) Application number: 93203283.2
(22) Date of filing: 24.11.1993
(51) Int. Cl.: H01J 29/70

(54) **Colour diplay tube including a convergence correction device**
Farbbildröhre mit Konvergenzkorrekturanordnung
Tube à image couleur muni d'un dispositif de correction de convergence

(30) Priority: 30.11.1992 EP 92203686
(43) Date of publication of application: 08.06.1994
(73) Proprietor: Philips Electronics N.V., 5621 BA Eindhoven (NL)
(72) Inventor: Jamar, Jacobus Hubertus Theodoor, NL-5656 AA Eindhoven (NL)
(74) Representative: Koppen, Jan

(56) References cited:
- US-A- 3 098 942
- US-A- 3 912 970
- US-A- 4 027 219
- US-A- 4 405 910
- PATENT ABSTRACTS OF JAPAN vol. 8, no. 78 (E-237) (1515) 10 April 1984 & JP-A-58 223 988

## Description

The invention relates to a display device having a colour display tube and a display screen with a tube neck located opposite said screen, and a convergence correction device comprising an arrangement of correction coils around the neck for generating correction fields, the convergence correction device having a support which surrounds the tube neck and which support with respect to the tube neck has an inner and an outer circumferential surface.

The English Abstract of JP-A 58-223,988 (Patent Abstracts of Japan, Vol.8, no.78 (E-237) (1515) 10 April 1984) describes a dynamic convergence compensation means for an in-line colour picture tube comprising eight spiral coils formed on a thin flexible insulating board by means of a print wiring board technology provided at the outer circumference of the neck of the picture tube.

Drawback of the use of such a configuration of spiral coils on a thin flexible board is that the surface area of the board is relatively large.

It is, inter alia, an object of the invention to provide a construction which does not have the above-mentioned drawbacks or which has these drawbacks to a lesser extent.

According to the invention, the display device with the display tube of the type described in the opening paragraph is therefore characterized in that on the inner circumferential surface a first system of at least one set of associated correction coils of the spiral type is arranged, in that on the outer circumferential surface a second system of at least one set of associated correction coils of the spiral type is arranged, and in that at least two correction coils of the first system are electrically interconnected via metallized apertures in the support by means of a first electrically conducting strip which is arranged on the outer circumferential surface and in that at least two correction coils of the second system are electrically interconnected via metallized apertures in the support by means of a second electrically conducting strip which is arranged on the inner circumferential surface.

The invention is based on the use of (coreless) coils of the spiral type with conductor turns which are present on a (cylindrical) surface. This provides the possibility of easily placing such a system of coils or a plurality of coil systems in a position close to the neck glass of the display tube (small diameter of the cylinder) so that a high sensitivity is possible. The inductance is low due to the absence of cores. For this concept use is made of spiral coils (referred to as print coils) which may be arranged on an inner surface and an outer surface of a flexible support (or foil) by means of a printing technique, the support surrounding the tube neck in such a way that the axes of the coils are radially directed towards the axis of the tube neck. This provides a great freedom of design. More particularly, for each correction field to be generated (particularly four and six-pole fields) a separate coil system can be used, which coil systems can be separately controlled in a simple manner.

In accordance with a first embodiment, a system of two sets of four (print) coils each for generating a four-pole x field and a four-pole y field, respectively, and/or a system of two sets of six (print) coils for generating a six-pole x field and a six-pole y field, respectively, are arranged on the flexible support. A practical embodiment is characterized in that a set of four coils for generating the one four-pole field and/or a set of six coils for generating the one six-pole field are arranged on one of the circumferential surfaces of the support, and a set of four coils for generating the other four-pole field and/or a set of six coils for generating the other six-pole field are arranged on the other circumferential surface. For simple interconnections, the respective four-pole field systems and six-pole field systems are preferably located opposite each other in slightly offset positions. Each one of the correction coil systems generating a four-pole field and a six-pole field subtends an angle of approximately 360° so that the foil provided with coils in the manner described above must be wound twice around the display tube. To prevent short-circuits between the rolled-up layers, it is efficient to provide an electrically insulating layer across the coil systems at at least one side of the foil.

To realise the required interconnections in a simple and practical manner, the coils of the coil systems are preferably arranged in such a way that at least a part of the connection strips is located in a free intermediate area (window) of a coil or in an area between two adjacent coils.

The coils for generating 2N pole fields may be of the spiral type with concentric outer turns surrounding a central window. However, the coils have a greater sensitivity if, in accordance with a preferred embodiment of the invention, they are of the type having outer turns surrounding an outer window and inner turns surrounding at least one inner window. Outer and inner window(s) may be concentric or not concentric.

Instead of correction coil systems each subtending an angle of 360°, use can be made of correction coil systems each subtending an angle of approximately 180° in accordance with a special embodiment of the invention. A foil whose inner surface and outer surface are provided with such correction coil systems need only be wound once around the tube neck, which is a considerable advantage (for example, a minimum surface area of foil to be used).

An embodiment of the invention is characterized in that one system of coils for red-x correction, one system of coils for red-y correction, one system of coils for blue-x correction and one system of coils for blue-y correction is arranged on the inner and outer circumferential surfaces of the flexible support. It is efficient when the coil system for the one red correction is arranged on the outer circumferential surface at approximately half a turn of the support and the coil system for the other red correction is arranged on the inner circumferential surface, and when the coil system for the one blue correction is arranged on the outer circumferential surface at the other half turn and the coil system for the other blue correction is arranged on the inner circumferential surface.

United States Patent US 3,098,942 describes a magnetic ray beam positioning device for cathode ray tubes which is independent of the deflection coils and is positioned in relation to these coils and the neck of the cathode ray tube to provide a field aligned with the deflection field. The beam positioning device either comprises two pairs of windings affixed to the neck of the cathode ray tube, one pair producing a vertically oriented magnetic field, the other pair producing a horizontally oriented magnetic field, or comprises two sets of permanent magnets, each set of magnets disposed at the outer surface of a sleeve, which sleeves are in centred relationship with respect to each other.

United States Patent US 4,027,219 describes a device in which coils (solenoids) wound on cores of a ferromagnetic material are arranged in a row around the tube, while they are incorporated in a circuit having controllable current sources in such a way that, upon energization, two four-pole fields and two six-pole fields are generated. Drawbacks of the use of such a configuration of solenoids are:
□ the insensitivity, requiring a convergence circuit with relatively expensive amplifiers ;
□ the little freedom of design as regards the exact field shape;
□ the complicated electric circuit which is required to generate all desired multipolar fields with a limited number of coils, and
□ the limited suitability for dynamic convergence due to the large self-inductance of the solenoids.

These and other aspects of the invention will be apparent from and elucidated with reference to embodiments described hereinafter. In the drawings
Fig. 1 shows diagrammatically a display tube including a deflection unit and a convergence correction device not showing features of the second part of Claim 1;
Fig. 2 shows a larger detail of the construction shown in Fig. 1, not showing all features of claim 1, but being useful for understanding the present invention;
Figs. 3A and 3B show diagrammatically embodiments, not showing all features of claim 1, but being useful for understanding the present invention, of four-pole field correction coil systems;
Figs. 3C, 3D, 3E and 3F show a four-pole y field, a four-pole x field, a six-pole x field and a six-pole y field, respectively, and their effects on the outer electron beams;
Fig. 4A shows a correction coil support in an unfolded shape;
Fig. 4B shows the conductor pattern at the upper side of the correction coil support of Fig. 4, with the two correction coil systems;
Fig. 4C shows the conductor pattern at the lower side of the correction coil support of Fig. 4, with two additional correction coil systems;
Fig. 4D is a plan view of a part of Fig. 4B on a larger scale;
Fig. 4E is a plan view of the opposite part of Fig. 4C on a larger scale;
Fig. 5A shows a conductor and field line pattern associated with a red-x correction coil;
Fig. 5B shows a conductor and field line pattern associated with a red-y correction coil;
Fig. 6A shows a circumferential surface of a correction coil support with two coil systems for red-x (R-x) and blue-x (B-x) correction, respectively;
Fig. 6B shows the opposite circumferential surface of the correction coil support of Fig. 6B with two coil systems for red-y (R-y) and blue-y (B-y) correction, respectively;
Fig. 7 shows a field line pattern associated with an alternative red-y correction;
Fig. 8 shows diagrammatically a support having a conductor pattern for generating the field line pattern of Fig. 7;
Fig. 9 shows a conductor pattern associated with another red-y correction;
Fig. 10A shows an alternative to the construction of Fig. 6B;
Fig. 10B shows an alternative to the construction of Fig. 6A and
Fig. 11 shows diagrammatically a correction coil system having alternative interconnections.

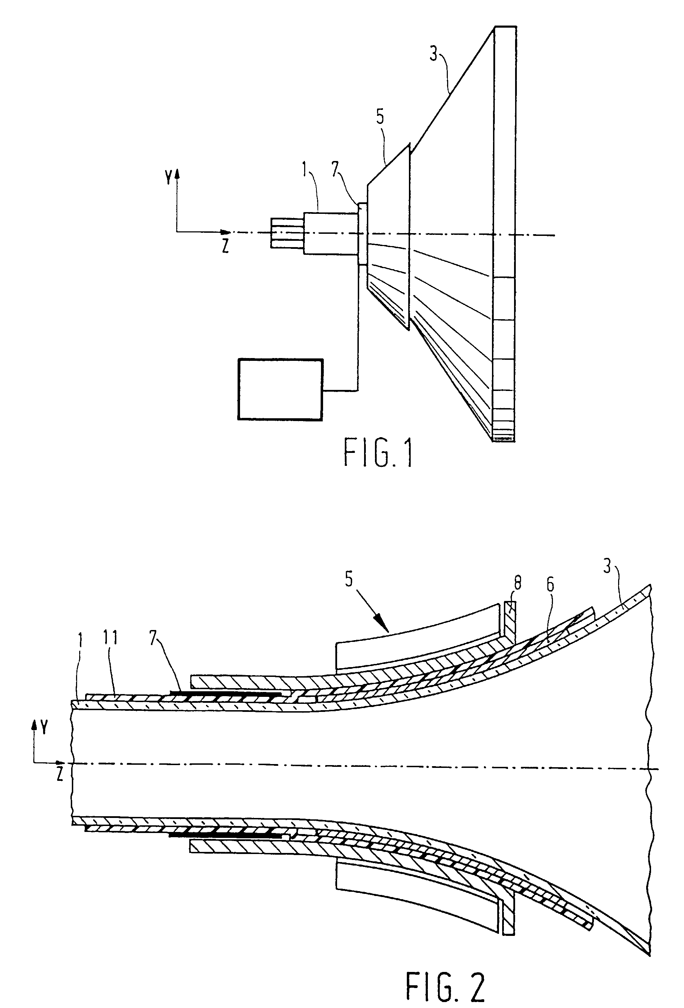

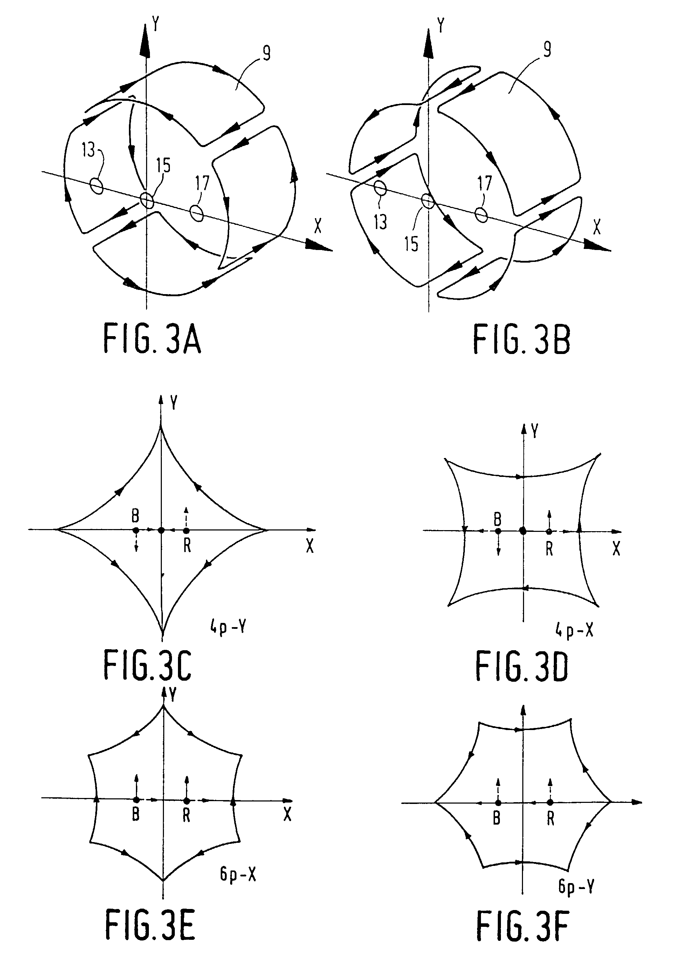

The colour display tube shown diagrammatically in Fig.1 has a cylindrical neck portion accommodating electron guns (not visible in Fig. 1) for generating three approximately coplanar electron beams, and a funnel-shaped portion 3. A deflection unit 5 is arranged at the area of the interface between the two portions. This unit comprises a coil support 11 which in this example supports a line deflection coil system 6 and a field deflection coil system 8, both of the type having a flat gun-sided end. A convergence correction device 7 is accommodated within the gun-sided end of field deflection coil system 8. This correction device may comprise a plurality of coils 9 formed as spirals directed radially towards the axis of the tube neck 1 and being arranged in a holder 11 secured to the neck in such a way that their axes are coplanar. When the coils 9 are connected to one or more current sources, magnetic fields resulting particularly in a displacement of the outer electron beams 13, 17 are generated within the tube neck 1. Red-blue y errors (y astigmatic errors) can be corrected by means of four coils (referred to as four-pole y coils) which are positioned and energized in the way as shown in the embodiment of Fig. 3A. Red-blue x errors (x astigmatic errors) can be corrected by means of four coils (referred to as four-pole x coils) which are positioned and energized in the way as shown in the embodiment of Fig. 3B. In fact, a four-pole field having a horizontal axis direction produces a vertical displacement of the outer beams 13, 17 in opposite directions (see Fig. 3C) and a four-pole field having a axis direction at 45 degrees to the horizontal produces a opposite displacement in the horizontal direction (see Fig. 3D).

The red and blue beams can be moved in the same direction parallel to the x axis (six-pole x coils: see Fig. 3E) or parallel to the y axis (six-pole y coils: see Fig. 3F) by means of a system of six coils which are positioned in the correct way to generate the desired six-pole field.

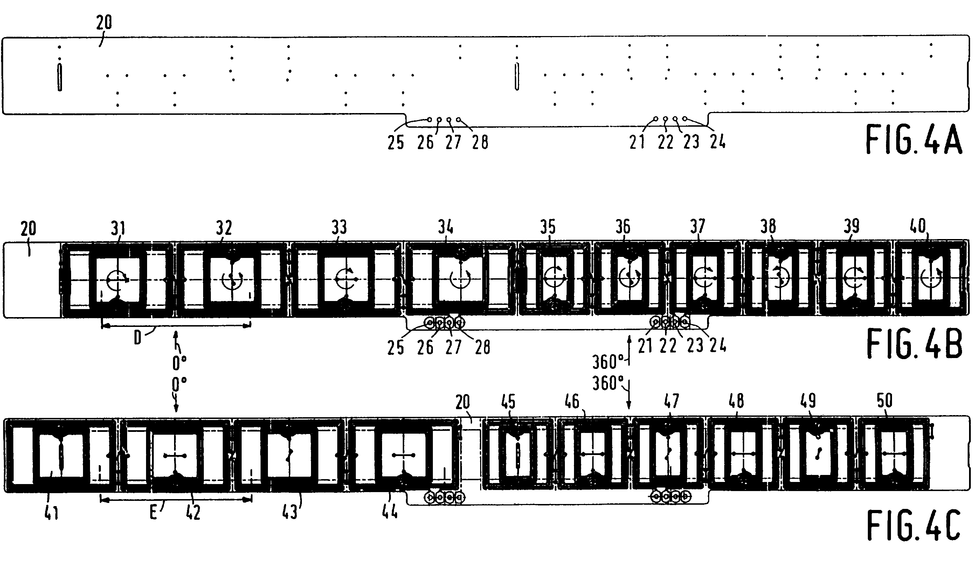

Fig. 4 shows a arrangement of correction coils of the above-described types on a flexible support, in this case a synthetic material foil 20 (Fig. 4A). The foil 20 has a large number of metallized apertures 21, 22, 23, 24, 25, 26, 27, 28, *etc*. for through-connection and connection of the correction coils.

Fig. 4B shows the upper side of the support 20 provided with four spiral-shaped coils 31-34 which constitute a four-pole x correction coil system when they subtend a angle of 360°, and six spiral-shaped coils 35-40 which jointly constitute a six-pole y correction coil system when they subtend a angle of 360°.

Fig. 4C shows the conductor pattern at the lower side of the support 20 with four spiral-shaped coils 41-44 which constitute a four-pole y correction coil system and six spiral-shaped coils 45-50 which constitute a six-pole x correction coil system. (Note: all elevational views have been taken from the same viewing direction). The metallized apertures 25, 26 constitute the connections for the four-pole y coils and the metallized apertures 27, 28 constitute the connections for the four-pole x coils, while the metallized apertures 55, 56 constitute the connections for the six-pole x coils and the metallized apertures 57, 58 constitute the connections for the six-pole y coils.

In this embodiment the support 20 with the correction coil systems is rolled up twice before assembly. The angular positions which are taken up by the coil conductors extending parallel to the longitudinal axis of the tube after assembly are shown in Figs. 4B and 4C. Angular position 0° coincides with the x axis.

As is shown in Fig. 4, an important aspect of the invention is that connection strips are used at the opposite side of the support and metallized apertures for the through-connections of the coils. As regards these through-connections, it is troublesome that the "other" side is already occupied by another (four-pole or six-pole) coil system. However, it still appears to be possible to realise a support provided with correction coils at two sides by situating the through-connections either within the window of a coil at the other side or in the space between two coils at the other side. In this respect it is important that the one four-pole coil system is arranged opposite the other four-pole coil system and the one six-pole coil system is arranged opposite the other six-pole coil system. The inner end of the coil 31 is connected *via* a metallized aperture 51, a transverse strip 52 situated at the opposite side between the coils 41 and 42 and a metallized aperture 53 to a conductor track 59 which is situated further to the outer end of the coil 31, which outer end is in its turn connected *via* an aperture 61, a longitudinal strip 62 situated at the other side within the window of the coil 42 and a aperture 63 to a point for through-connecting the coil 32. The arrows in the coils 31, 32, 33, 34, *etc*. indicate the direction of the current upon energization.

A third type of through-connection (in addition to the above-mentioned transverse strip 52 and the longitudinal strip 62) is the oblique strip 72 situated within the window of coil 32, which strip interconnects the outer ends of the coils 42 and 43 *via* metallized apertures 71 and 73. These three types of through-connections are found a number of times in the conductor patterns of Figs. 4B and 4C.

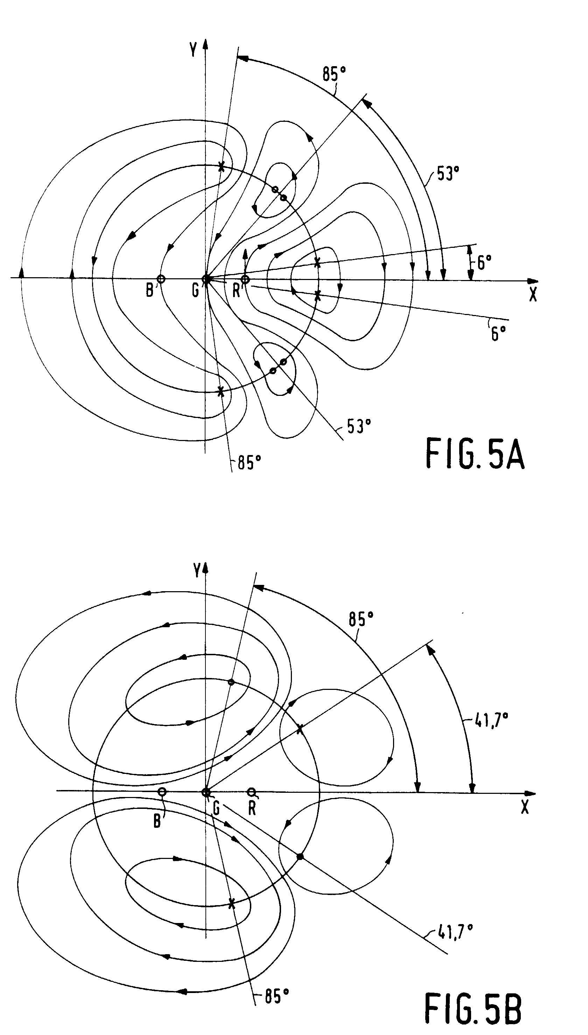

The embodiment of Fig. 4, with two correction coil systems per turn (one at the inner side and one at the outer side *via* the support) implies that two turns of the support are required for the four coil systems. Another embodiment of a double-sided foil provides the possibility of using one turn only. To realise this, correction coil systems each subtending an angle of approximately 180° instead of 360° are used, *i.e.* each occupies approximately half a turn of the support. The reason therefor is that no four-pole coil systems and six-pole coil systems are used (which can move both outer beams with respect to the central beam), but coil systems which can move one outer beam with respect to the two other beams. This is referred to as red-x, blue-x, red-y and blue-y corrections, respectively. The operation will be explained by way of example with reference to Fig. 5.

Fig. 5A illustrates the red-x correction. The circles and crosses at the circumference of the circle indicate the positions of the turns; the current direction is, for example "into the sheet" for the crosses and "out of the sheet" for the circles. The field line pattern shown indicates that a strong vertically directed magnetic field prevails at the location of the red beam (*i.e.* the red beam is deflected strongly to the right), while a weak magnetic field prevails at the location of the blue and green beams (which field is preferably equal for blue and green). The latter can be realised by a suitable choice of the angles of the turns, for example, 6°, 53°, 53° and 85°, and -6°, -53°, -53° and -85° with respect to the x axis. Generally, suitable configurations are obtained when the longitudinal conductor portions of the coils are situated at angular positions between 0° and 12°, between 45° and 60°, between 75° and 90° and the mirror images with respect to their x axis.

Fig. 5B illustrates the red-y correction. Again, a (substantially) equal magnetic field (now in the x direction) prevails at the location of B and G, and a magnetic field having a considerably different strength prevails at the location of R. The field at R is almost zero, but this does not make any difference for the convergence effect because B and G are moved vertically with respect to red to the same extent. Consequently, a red-y correction is still realised. Suitable angles are, for example 45° and 85°; however, to fit a red-x and a red-y correction opposite each other at both sides of a double foil, 41.7° and 85° and their mirror images with respect to the x axis are more suitable. Generally, suitable configurations are obtained when the longitudinal conductor portions of the coils are situated at angular positions between 30° and 50° and between 75° and 90° and the mirror images with respect to their x axis.

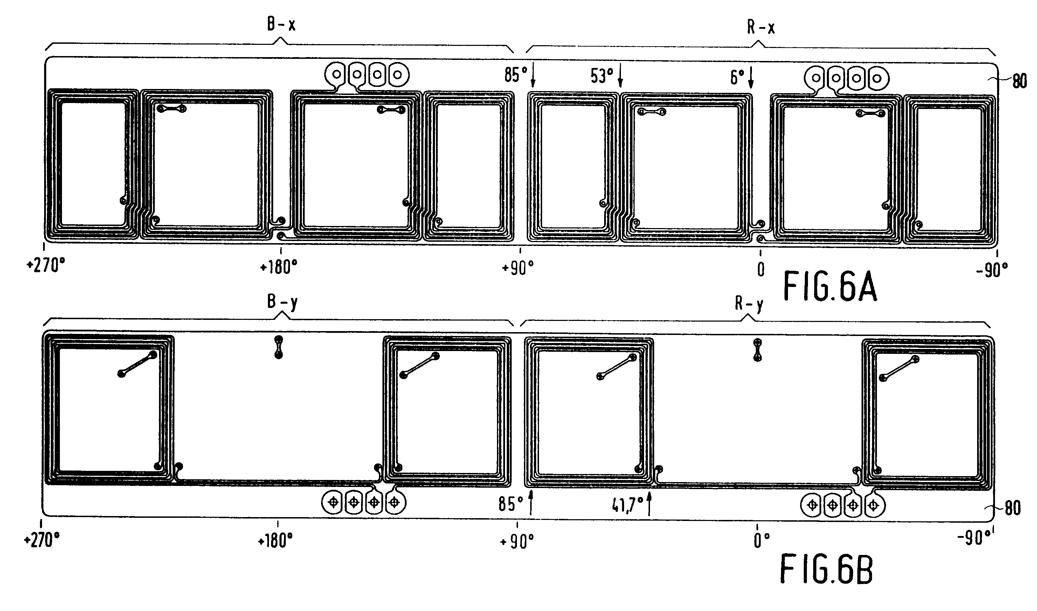

Fig. 6A shows a conductor pattern provided on a support 80 with a red-x (R-x) and a blue-x (B-x) correction coil system in accordance with the above-mentioned concept. Fig. 6B shows a conductor pattern provided on the opposite surface of the support with a red-y (R-y) and a blue-y (B-y) correction coil system which is the counterpart of the pattern of Fig. 6A. (The elevational views of the conductor patterns have been taken from opposite viewing directions.) After assembly, the coil systems for red correction are thus situated at one half turn (for example, x correction inside, y correction outside) and the coil systems for blue correction are situated at the other half turn (also, for example x correction inside, y correction outside). In this case the support 80 is wound approximately once around the neck of the display tube. The through-connections of the coils in this embodiment are also realised in the shape of transverse, longitudinal or oblique strips located within the coil windows or between the coils and arranged on the opposite surface of the support and the metallized apertures.

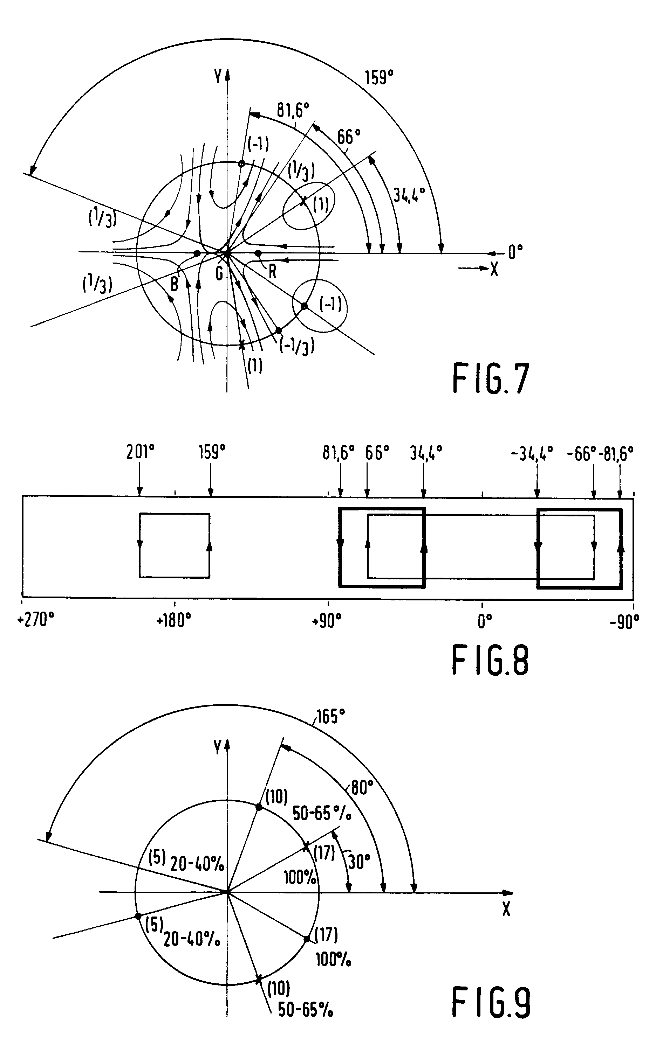

The fact that, for example for the red-y correction red itself is not displaced, but blue and green are jointly displaced implies a raster side effect of the convergence correction. In practice this raster effect is sometimes undesirable. The same holds true for the blue-y correction. This can be amended by adding extra turns in the shape of an auxiliary coil having a current intensity which is a given fraction of the current intensity in the other turns. However, these additional turns cannot remain within half a turn. By suitable choice of the angular positions of all turns and of said fraction, all of the 4 corrections can be realised on one turn of double-sided foil. See Figs. 7 and 8. Here the angular positions are 34.4° (relative current intensity 1), 66°, (intensity +1/3), 81.6° (intensity -1) and 159° (intensity +1/3).

Fig. 7: diagrammatical representation of the principle, the angular positions of (the points of gravity of) the conductor portions and the field lines of the generated magnetic field.

Fig. 8: diagrammatical representation of the conductor pattern on the support. The fat lines indicate the turns of relative current intensity 1 (= approximately the pattern of the unimproved y correction), the thin lines indicate the (added) tracks of current intensity fraction ∗1: as it were, two conductor loops, or auxiliary coils, have been added, one of which partly overlaps the original pattern. All loops should comprise suitable numbers of turns (in connection with the fraction; the fraction should thus be the quotient of two integers) and should be preferably interconnected so that one current is sufficient to energize the entire correction in the correct manner.

Suitable configurations are generally obtained when the angular positions of the longitudinal conductor portions of the coils for red-y correction differ from the above-mentioned angular positions by not more than 10°.

It will be evident that a pattern of auxiliary coils can be added to the blue-y correction coil pattern in Fig. 6B similar to the red-y correction coil pattern (Fig. 8).

In connection with the sensitivity (millimetres of convergence effect per ampere) it may be necessary to give the coils a relatively large number of turns. Since the conductor tracks cannot be made arbitrarily narrow, this may give rise to problems with the through-connections. The invention provides an attractive solution to this problem in that the design of Fig. 8 is modified in such a way that the conductor portions of the respective angular positions 66° and 81.6° and -66° and -81.6° "coincide". Since opposite currents flow through these conductor portions, they "annihilate" each other partially. It is thus sufficient to use locally fewer turns. A through-connection may also be dispensed with. Moreover, a more favourable design can be realised if the "fraction" (current intensity in the auxiliary coils with respect to the current intensity in the main coils) is not required to be equal for the two auxiliary loops. The resultant design for situating the points of gravity of the longitudinal conductor portions of the adapted red-y correction coil is shown in Fig. 9. The number of turns and the fraction are indicated for each point along the circumference of the circle.

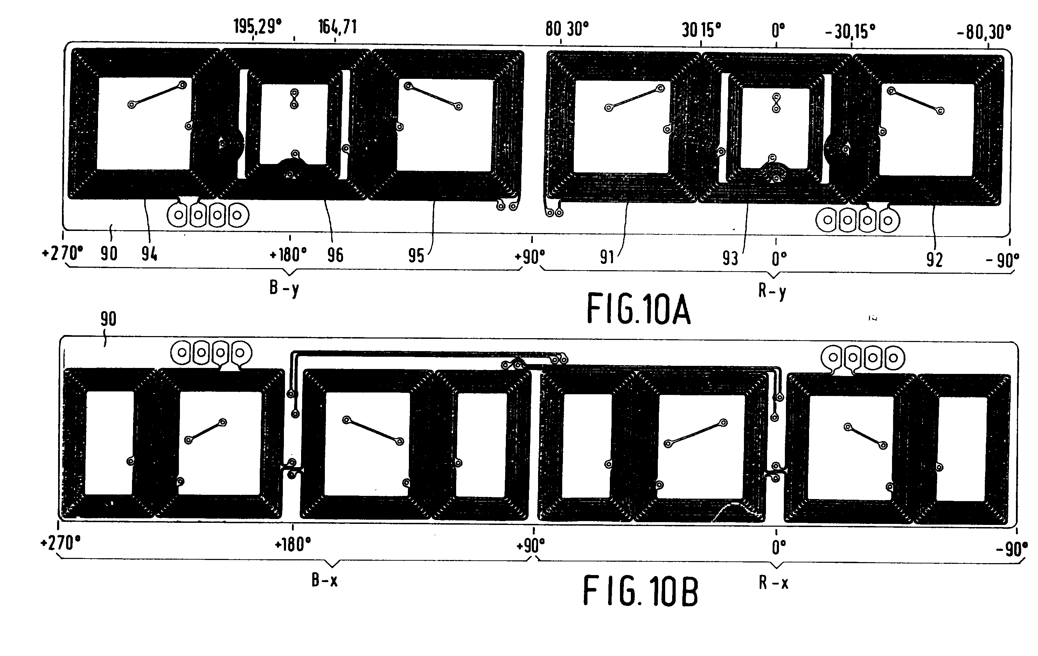

An elaboration is shown in Fig. 10A. This Figure shows the upper side of a support 90 with a main correction coil system 91, 92 for red-y (R-y) correction between which a auxiliary correction coil 93 is arranged which has been added to the main correction coil system 94, 95 for blue-y (B-y) correction. An auxiliary correction coil 96 added to the coil system 91, 92 is arranged between the coils 94, 95. The Figure shows the angular positions for the R-y system. The differences in numbers of turns in the different coil portions can clearly be seen.

The way in which the coils of Fig. 10A are through-connected is shown in Fig. 10B showing the conductor pattern at the lower side of the support 90. The coil systems for blue-x correction and red-x correction at this side correspond to the coil systems shown in Fig. 6A. (The viewing directions in Figs. 10A and 10B are opposed to each other.)

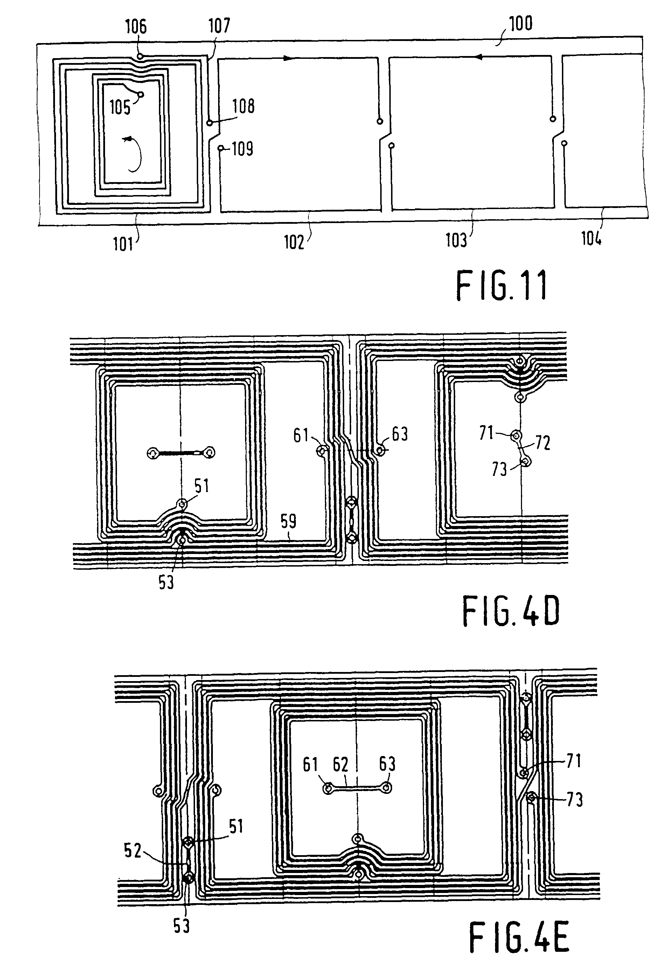

Fig. 11 shows diagrammatically a conductor pattern having an inch density for a four-pole correction coil system 101 ... 104. Coil 101 has an inner end 105 which is connected to a connection point 106 of the outer turn 107 of the coil 101 *via* a (transverse) connection strip at the opposite side of the support 100. The outer turn 107 terminates at a connection point 108 which is connected to a connection point 109 of the outer turn of coil 102 *via* an (oblique) connection strip at the opposite side of the support 100. Since two outer windings are through-connected, the "crossing" may be very short and fit in narrow coil window at the opposite side.

It is to be noted that the flexible convergence coil supports described hereinbefore can be mounted in different ways (after they have been rolled up). For example, such a support may be mounted around a electrically insulating (synthetic material) ring. An alternative solution is to accommodate the rolled-up support within a cylinder of electrically insulating material. At its outer side, such a cylinder may have one or more plug housings with electrically conducting pins making contact with the metallized connection apertures of the support.

## Claims

1. A display device having
□ a colour display tube and a display screen with a tube neck (1) located opposite said screen,
□ and a convergence correction device (7) comprising an arrangement of correction coils (9) around the neck (1) for generating correction fields,
□ the convergence correction device (7) having a support (20) which surrounds the tube neck (1) and which support (20) with respect to the tube neck (1) has an inner and an outer circumferential surface,
**characterized**
□ in that on the inner circumferential surface a first system of at least one set of associated correction coils (31-34; 35-40) of the spiral type is arranged,
□ in that on the outer circumferential surface a second system of at least one set of associated correction coils (41-44; 45-50) of the spiral type is arranged,
□ and in that at least two correction coils (31, 32) of the first system are electrically interconnected via metallized apertures (51, 53; 61, 63) in the support (20) by means of a first electrically conducting strip (52, 62) which is arranged on the outer circumferential surface
□ and in that at least two correction coils (42, 43) of the second system are electrically interconnected via metallized apertures (71, 73) in the support (20) by means of a second electrically conducting strip (72) which is arranged on the inner circumferential surface.

2. A display device as claimed in Claim 1, characterized in that a system of two sets of four correction coils (31-34; 41-44) for generating a four-pole x field and a four-pole y field, respectively, and/or a system of two sets of six correction coils (35-40; 45-50) for generating a six-pole x field and a six-pole y field, respectively, are arranged on the flexible support (20).

3. A display device as claimed in Claim 2, characterized in that a set of four coils for generating the one four-pole field and/or a set of six coils for generating the one six-pole field are arranged on one of the circumferential surfaces of the support and in that a set of four coils for generating the other four-pole field and/or a set of six coils for generating the other six-pole field are arranged on the other circumferential surface.

4. A display device as claimed in Claim 3, characterized in that the respective four-pole field systems and the respective six-pole field systems are located opposite each other in slightly offset positions.

5. A display device as claimed in Claim 1, characterized in that at least a part of the connection strips is located in a free intermediate area of a coil or in an area between two adjacent coils.

6. A display device as claimed in Claim 1, characterized in that one system of coils for red-x correction, one system of coils for red-y correction, one system of coils for blue-x correction and one system of coils for blue-y correction are arranged on the inner and outer circumferential surfaces of the flexible support (80) and in that the support (80) is wound once around the tube neck (1).

7. A display device as claimed in Claim 6, characterized in that the coil system for the one red correction is arranged on the outer circumferential surface at approximately half a turn of the support and the coil system for the other red correction is arranged on the inner circumferential surface, and in that the coil system for the one blue correction is arranged on the outer circumferential surface at the other half turn and the coil system for the other blue correction is arranged on the inner circumferential surface.

8. A display device as claimed in Claim 1, characterized in that the correction coils are of the multiple turn type and in that the inner end of at least one correction coil (31) is connected via a strip (52) at the opposite support side to a coil turn (59) situated further to the outer end of the one correction coil (31), said coil turn (59) being in its turn connected via a strip (62) at the opposite support side to a turn of an adjacent coil (32).

## Patentansprüche

1. Wiedergabeanordnung mit
- einer Farbbildröhre und mit einem Wiedergabeschirm mit einem gegenüber dem genannten Wiedergabeschirm liegenden Röhrenhals (1), und
- mit einer Konvergenzkorrekturanordnung (7) mit einer Anordnung von Korrekturspulen (9) um den Hals (1) zum Erzeugen von Korrekturfeldern;
- wobei die Konvergenzkorrekturanordnung (7) einen Träger (20) aufweist, der den Röhrenhals (1) umgibt und wobei dieser Träger (20) gegenüber diesem Röhrenhals (1) eine Innen- und eine Außenmantelfläche aufweist,
dadurch gekennzeichnet, daß
- daß auf der Innenmantelfläche ein erstes System aus wenigstens einem Satz zugeordneter spiralförmiger Korrekturspulen (31 - 34; 35 - 40) vorgesehen ist,
- auf der Außenmantelfläche ein zweites System aus wenigstens einem Satz zugeordneter spiralförmiger Korrekturspulen (41 - 44; 45 - 50) vorgesehen ist, und
- wenigstens zwei Korrekturspulen (31, 32) des ersten Systems über metallisierte Öffnungen (51, 53; 61, 63) in dem Träger (20) mittels eines ersten elektrisch leitenden Streifens (52, 62) miteinander elektrisch verbunden sind, der auf der Außenmantelfläche vorgesehen ist und
- wenigstens zwei Korrekturspulen (42, 43) des zweiten Systems über metallisierte Öffnungen (71, 73) in dem Träger (20) mittels eines zweiten elektrisch leitenden Streifens (72) miteinander elektrisch verbunden sind, der auf der Innenmantelfläche vorgesehen ist.

2. Wiedergabeanordnung nach Anspruch 1, dadurch gekennzeichnet, daß auf dem geschmeidigen Träger (20) ein System zweier Sätze zu je vier Korrekturspulen (31 - 34; 41 - 44) zum Erzeugen eines Vierpol-x- bzw. eines Vierpol-y-Feldes in Kombination und/oder ein System zweier Sätze zu je sechs Korrekturspulen (35 - 40; 45-50) zum Erzeugen eines Sechspol-x- bzw. eines Sechspol-y-Feldes vorgesehen sind.

3. Wiedergabeanordnung nach Anspruch 2, dadurch gekennzeichnet, daß auf einer der Mantelflächen des Trägers ein System aus vier Spulen zum Erzeugen des einen Vierpolfeldes und/oder ein System aus sechs Spulen zum Erzeugen des einen Sechspolfeldes, und daß auf der anderen der Mantelflächen ein System aus vier Spulen zum Erzeugen des anderen Vierpolfeldes und/oder ein System aus sechs Spulen zum Erzeugen des anderen Sechspolfeldes vorgesehen sind.

4. Wiedergabeanordnung nach Anspruch 3, dadurch gekennzeichnet, daß die Vierpolfeldsysteme und die Sechspolfeldsysteme einander gegenüberliegen, und zwar in untereinander etwas verschobener Lage.

5. Wiedergabeanordnung nach Anspruch 1, dadurch gekennzeichnet, daß wenigstens ein Teil der Verbindungsstreifen in einem freien Zwischengebiet einer Spule oder in einem Gebiet zwischen zwei benachbarten Spulen liegt.

6. Wiedergabeanordnung nach Anspruch 1, dadurch gekennzeichnet, daß auf den Innen- und Außenmantelflächen des geschmeidigen Trägers (80) ein Spulensystem für Rot-x-Korrektur, ein Spulensystem für Rot-y-Korrektur, ein Spulensystem für Blau-x-Korrektur und ein Spulensystem für Blau-y-Korrektur vorgesehen ist, und daß der Träger (80) einmal um den Röhrenhals (1) geschlungen ist.

7. Wiedergabeanordnung nach Anspruch 6, dadurch gekennzeichnet, daß auf etwa einer halben Umdrehung des Trägers auf der Außenmantelfläche des Spulensystems für die eine Rot-Korrektur und auf der Innenmantelfläche des Spulensystems für die andere Rot-Korrektur vorgesehen ist und auf der anderen halben Umdrehung auf der Außenmantelfläche das Spulensystem der einen Blau-Korrektur und auf der Innenmantelfläche das Spulensystem für die andere Blau-Korrektur vorgesehen ist.

8. Wiedergabeanordnung nach Anspruch 1, dadurch gekennzeichnet, daß die Korrekturspulen von dem Vielwindungentyp sind und daß das Innenende wenigstens einer Korrekturspule (31) über einen Streifen (52) an der gegenüberliegenden Trägerseite mit einer Spulenwindung (59) weiter weg von dem Außenende der einen Korrekturspule (31) verbunden ist, wobei die genannte Spulenwindung (59) ihrerseits über einen Streifen (62) an der gegenüberliegenden Trägerseite mit einer Windung einer Nachbarspule (32) verbunden ist.

## Revendications

1. Dispositif d'affichage comportant
- un tube image couleur et un écran d'affichage avec un col de tube (1) situé à l'opposé dudit écran,
- et un dispositif de correction de convergence (7) comprenant un agencement de bobines de correction (9) autour du col (1) pour générer des champs de correction,
- le dispositif de correction de convergence (7) ayant un support (20) qui entoure le col de tube (1) et qui, par rapport au col de tube (1), présente une surface circonférentielle intérieure et une surface circonférentielle extérieure,
caractérisé,
- en ce qu'un premier système d'au moins un jeu de bobines de correction associées (31-34; 35-40) du type en spirale est disposé sur le surface circonférentielle intérieure,
- en ce qu'un deuxième système d'au moins un jeu de bobines de correction associées (41-44; 45-50) du type en spirale est disposé sur la surface circonférentielle extérieure,
- et en ce qu'au moins deux bobines de correction (31, 32) du premier système sont électriquement interconnectées via des ouvertures métallisées (51, 53; 61, 63) dans le support (20) au moyen d'une première bande conductrice de l'électricité (52, 62) qui est disposée sur la surface circonférentielle extérieure,
- et en ce qu'au moins deux bobines de correction (42, 43) du deuxième système sont électriquement interconnectées via des ouvertures métallisées (71, 73) dans le support (20) au moyen d'une deuxième bande conductrice de l'électricité (72) qui est disposée sur la surface circonférentielle intérieure.

2. Dispositif d'affichage suivant la revendication 1, caractérisé en ce qu'un système de deux jeux de quatre bobines de correction (31-34; 41-44) destiné à générer un champ x à quatre pôles et un champ y à quatre pôles, respectivement, et/ou un système de deux jeux de six bobines de correction (35-40; 45-50) destiné à générer un champ x de six pôles et un champ y de six pôles, respectivement, sont disposés sur le support souple (20).

3. Dispositif d'affichage suivant la revendication 2, caractérisé en ce qu'un jeu de quatre bobines destiné à générer le premier champ à quatre pôles et/ou un jeu de six bobines destiné à générer le premier champ à six pôles sont disposés sur une des surfaces circonférentielles du support et en ce qu'un jeu de quatre bobines destiné à générer l'autre champ à quatre pôles et/ou un jeu de six bobines destiné à générer l'autre champ à six pôles sont disposés sur l'autre surface circonférentielle.

4. Dispositif d'affichage suivant la revendication 3, caractérisé en ce que les systèmes de champs à quatre pôles respectifs et les systèmes de champs à six pôles respectifs sont placés les uns en face des autres dans des positions légèrement décalées.

5. Dispositif d'affichage suivant la revendication 1, caractérisé en ce qu'au moins une partie des bandes de connexion est placée dans une zone intermédiaire libre ou dans une zone située entre deux bobines adjacentes.

6. Dispositif d'affichage suivant la revendication 1, caractérisé en ce qu'un système de bobines pour la correction x rouge, un système de bobines pour la correction y rouge, un système de bobines pour la correction x bleue et un système de bobines pour la correction y bleue sont disposés sur les surfaces circonférentielles intérieure et extérieure du support souple (80) et en ce que le support (80) est enroulé une fois autour du col de tube (1).

7. Dispositif d'affichage suivant la revendication 6, caractérisé en ce que le système de bobines pour la première correction rouge est disposé sur la surface circonférentielle extérieure sur approximativement une demi-spire du support et le système de bobines pour l'autre correction rouge est disposé sur la surface circonférentielle intérieure, et en ce que le système de bobines pour la première correction bleue est disposé sur la surface circonférentielle extérieure sur l'autre demi-spire et le système de bobines pour l'autre correction bleue est disposé sur la surface circonférentielle intérieure.

8. Dispositif d'affichage suivant la revendication 1, caractérisé en ce que les bobines de correction sont du type à spires multiples et en ce que l'extrémité intérieure d'au moins une bobine de correction ( 31) est connectée via une bande (52) sur la face opposée du support à une spire de bobine (59) située, davantage vers l'extrémité extérieure de la première bobine de correction (31), ladite spire de bobine (59) étant, à son tour, connectée via une bande (62) sur la face opposée du support à une spire d'une bobine adjacente (32).
